# EUROPÄISCHE PATENTSCHRIFT

(11) **EP 3 450 818 B1**
(45) Veröffentlichungstag und Bekanntmachung des Hinweises auf die Patenterteilung: **23.06.2021**
(21) Anmeldenummer: 18171412.2
(22) Anmeldetag: 09.05.2018
(51) Int. Cl.: F16P 1/02, B65C 9/40, F16P 3/08

(54) **ETIKETTIERMASCHINE ZUM ETIKETTIEREN VON BEHÄLTERN**
LABELLING MACHINE FOR LABELLING CONTAINERS
MACHINE D'ÉTIQUETAGE DESTINÉE À L'ÉTIQUETAGE DE RÉCIPIENTS

(30) Priorität: 05.09.2017 DE 202017105331 U
(43) Veröffentlichungstag der Anmeldung: 06.03.2019
(73) Patentinhaber: KRONES Aktiengesellschaft, 93073 Neutraubling (DE)
(72) Erfinder: POTEMPA, Oliver, 93073 Neutraubling (DE); SCHERL, Stefan, 93073 Neutraubling (DE); KRAUS, Andreas, 93073 Neutraubling (DE)
(74) Vertreter: Grünecker Patent- und Rechtsanwälte PartG mbB

(56) Entgegenhaltungen:
- DE-A1-102013 001 546
- DE-U1- 9 300 424
- DE-U1-202010 000 032

## Beschreibung

Die vorliegende Erfindung betrifft eine Behälterbehandlungsmaschine zum Behandeln von Behältern, insbesondere Etikettiermaschine zum Etikettieren von Behältern, wie Flaschen in der getränkeverarbeitenden Industrie gemäß dem Oberbegriff des Anspruchs 1.

### Stand der Technik

Behälterbehandlungsmaschinen, wie beispielsweise Etikettiermaschinen gemäß dem Oberbegriff des Anspruchs 1 sind aus dem Stand der Technik bereits bekannt. So zeigt beispielsweise die DE 20 2005 005 485 U1 einen Schutztürgriff mit einem Griffteil. Ferner ist hier ein Funktionselement vorgesehen, das als zusätzliches Bauteil mit dem Griffteil verbunden werden kann. DE9300424U offenbart eine Behälterbehandlungsmaschine nach dem Oberbegriff des Anspruchs 1.

Grundsätzlich ist es auch bekannt, für Schutzelemente von Maschineneinheiten Sicherheitsschalter vorzusehen, mit denen das Schutzelement freigegeben werden kann.

Diese Schalter sind zumeist am Maschinengerüst oder einer anderen Stelle angebracht, um sicherzustellen, dass ein Bediener, der diese Schalter betätigt, nicht gleichzeitig in bewegliche Teile der Maschine greifen kann.

Dadurch sind diese Schalter jedoch nur schwer zugänglich. Ist es ferner notwendig, dass ein Bediener nach dem erneuten Schließen eines Schutzelements den Standort wechselt, um das Schutzelement zu verriegeln, besteht ein Sicherheitsrisiko für einen eventuell in der Zwischenzeit das Schutzelement betätigenden anderen Bediener.

### Aufgabe

Ausgehend vom bekannten Stand der Technik besteht die zu lösende technische Aufgabe somit darin, eine Behälterbehandlungsmaschine zum Behandeln von Behältern anzugeben, bei der die Vorrichtung zum Ver- und Entriegeln eines Schutzelements ergonomisch günstig zu erreichen ist und gleichzeitig die Sicherheit aller Bediener gewährleistet wird.

### Lösung

Diese Aufgabe wird erfindungsgemäß durch die Behälterbehandlungsmaschine gemäß Anspruch 1 gelöst. Vorteilhafte Weiterbildungen der Erfindung sind in den Unteransprüchen erfasst.

Die erfindungsgemäße Behälterbehandlungsmaschine zum Behandeln von Behältern wie Flaschen in der getränkeverarbeitenden Industrie umfasst wenigstens eine Maschineneinheit, die im Betrieb Behälter etikettieren kann, und ein bewegliches Schutzelement, das zumindest einen Teil der Maschineneinheit von der Umgebung trennt, wobei das Schutzelement einen Griff zum Bewegen des Schutzelements umfasst. Die Behälterbehandlungsmaschine ist dadurch gekennzeichnet, dass der Griff einen Taster zum Ver- und/oder Entriegeln umfasst, bei dessen Betätigung die Bewegung des Schutzelements freigegeben und/oder gesperrt werden kann.

Im Sinne der Erfindung ist unter der Maschineneinheit jegliche Komponente der Behälterbehandlungsmaschine zu verstehen. Darunter fallen bei einer Etikettiermaschine insbesondere drehende Elemente, wie beispielsweise Greiferzylinder oder ein eventuell vorgesehenes Maschinenkarussell. Aber auch linear arbeitende oder sich bewegende Elemente fallen hierunter. Bei anderen Behälterbehandlungsmaschinen können auch drehende Elemente wie ein Karussell, auf dem die Behälter transportiert und behandelt werden, als Maschineneinheit gesehen werden.

Unter einer Behälterbehandlungsmaschine werden u.a. eine Streckblasmaschine zum Herstellen bzw. Aufblasen von PET-Flaschen, eine Abfüllmaschine zum Abfüllen von Behältern, eine Direktdruckmaschine zum Bedrucken von Behältern, eine Beschichtungsmaschine zum Beschichten von Behältern, eine Reinigungs- bzw. Sterilisationsmaschine zum Reinigen bzw. Sterilisieren von Behältern, Inspektionsmaschinen zum Inspizieren von Behältern, eine Verpackungsmaschine zum Verpacken von Behältern, insbesondere in Umverpackungen (Folie, Karton), ein Transporteur zum Transportieren von Behältern (z.B. Weichen, Einteiler, Transportsterne, Puffer), Palettiermaschinen zum Palettieren von Behältern, Depalletiermaschinen zum Depalettieren von Behältern, Verschließmaschinen zum Verschließen von Behältern und dergleichen verstanden. Dementsprechend kann unter einem Behandeln ein Herstellen, Aufblasen, Bedrucken, Beschichten, Reinigen, Sterilisieren usw. verstanden werden. Im Folgenden wird speziell auf eine Etikettiermaschine Bezug genommen, die Merkmale sind jedoch auch auf die anderen genannten Maschinen übertragbar.

Die vorgeschlagenen Behälterbehandlungsmaschinen stellen keine abschließende Liste möglicher Maschinen dar. Jedoch erweist sich die vorliegende Erfindung gerade in Kombination mit diesen Behälterbehandlungsmaschinen als besonders vorteilhaft, da hier üblicherweise aufgrund vieler beweglicher Teile und/oder hoher Temperaturen/heißer Komponenten ein erhebliches Verletzungsrisiko für einen Bediener besteht, was einen Maschinenschutz nahezu unumgänglich macht. Die vorliegende Erfindung kann daher in Kombination mit diesen konkreten Maschinen besonders vorteilhaft den Schutz des Bedieners und gleichzeitig die Zugänglichkeit der Komponenten der Maschine gewährleisten.

Dass das Schutzelement einen Teil der Maschineneinheit von der Umgebung trennt ist so zu verstehen, dass von außerhalb des Schutzelements ein manueller Eingriff in die Maschineneinheit oder den Teil der Maschineneinheit erschwert oder unmöglich ist. So kann beispielsweise das Schutzelement als Kasten oder zumindest als "Umzäunung" gedacht sein, die einen innerhalb des Schutzelements liegenden Raum oder Bereich (also ein von dem Schutzelement eingeschlossenes Volumen) von der Umgebung abtrennt, sodass ein in der Umgebung stehender Bediener nicht in den inneren Bereich eingreifen kann, wenn das Schutzelement geschlossen ist.

Durch Vorsehen des Tasters zum Ver- und/oder Entriegeln am Griff wird sichergestellt, dass ein Bediener, der das Schutzelement öffnet oder schließt, nicht in die Maschineneinheit eingreift, so dass seine Sicherheit gewährleistet werden kann. Gleichzeitig ist der Griff für den Bediener leichter zu erreichen und eine Verzögerung beim Verriegeln des Schutzelements kann vermieden werden, sodass auch nachfolgende Bediener zu jeder Zeit geschützt sind.

In einer Ausführungsform ist der Taster auf einer vom Schutzelement wegweisenden Seite des Griffs angeordnet. Er ist so leichter für den Bediener zugänglich und ein versehentliches Nicht-Betätigen kann vermieden werden.

Ferner kann vorgesehen sein, dass der Taster so angeordnet ist, dass er beim Bedienen des Griffs zum Bewegen des Schutzelements gedrückt werden kann. Auch mit dieser Ausführungsform kann vorteilhaft verhindert werden, dass das Bedienen des Tasters vergessen wird oder aus anderen Gründen nicht erfolgt.

Ferner kann vorgesehen sein, dass der Taster einen Knopf umfasst, bei dessen einmaliger Betätigung die Bewegung des Schutzelements freigegeben werden kann und bei dessen zweiter Betätigung die Bewegung des Schutzelements gesperrt werden kann. Die Bedienung des Tasters ist so möglichst einfach und kann vom Bediener mit geringer Übung erlernt werden.

In einer alternativen Ausführungsform ist vorgesehen, dass der Taster als Totmanneinrichtung ausgebildet ist, die die Bewegung des Schutzelements nur während ihrer Betätigung freigibt und die Bewegung des Schutzelements sperrt, wenn sie nicht betätigt wird. So kann vermieden werden, dass nach Schließen des Schutzelements dieses versehentlich nicht verriegelt wird, was ansonsten eine Gefahr für nachfolgende Bediener bedeuten kann.

In einer Ausführungsform ist vorgesehen, dass der Taster als analoger Taster oder als elektronischer Taster bzw. Schalter ausgebildet ist. Ein analoger Taster ist hier als solcher Taster zu verstehen, dessen Betätigung durch mechanische Wechselwirkung mit wenigstens einem anderen Element (beispielsweise einem Verschlusselement, das die Bewegung des Schutzelements sperren kann) ein Freigeben oder Sperren der Bewegung des Schutzelements bewirkt. Ein elektronischer Taster bzw. Schalter hingegen ist ein solcher Schalter, der zumindest in Wechselwirkung mit einer elektronischen Steuereinheit (beispielsweise einem Computer) Teile des Schutzelements und/oder der Etikettiermaschine ansteuert und ihre Bewegung freigibt oder entriegelt. Eine mechanische Wechselwirkung zwischen dem Taster bzw. Schalter und diesen Elementen ist in diesem Fall nicht notwendig.

Weiterhin kann vorgesehen sein, dass dem Taster ein Lichtelement, beispielsweise eine oder mehrere LEDs zugeordnet ist, das ein optisches Signal ausgeben kann, wenn eine Bewegung des Schutzelements ohne Betätigung des Tasters zu bewegen versucht wird. Ein Bediener, der das Schutzelement ohne Betätigen des Tasters versucht, wird nicht erfolgreich sein. Um die Fehlersuche zu verkürzen, kann das optische Signal dem Bediener vorteilhaft mitteilen, dass der Taster zu betätigen ist.

Weiterhin kann vorgesehen sein, dass das Schutzelement als Schutztür mit einem oder mehreren Türflügeln oder als Hebeschutzsegment ausgebildet ist. Das Hebeschutzsegment ist ein solches Schutzelement, dessen Bewegung zum wesentlichen Teil oder vollständig in vertikaler Richtung erfolgt. Dies schließt auch eine Kippbewegung um eine horizontale Kippachse mit ein, bei der ein solches Schutzelement zumindest teilweise in vertikaler Richtung bewegt wird. Diese Ausführungsformen können je nach dem für die Etikettiermaschine zur Verfügung stehenden Platz vorteilhaft genutzt werden.

Ferner umfasst der Taster einen zweiten Knopf, bei dessen Betätigung der Betrieb der Etikettiermaschine freigegeben werden kann. Während ein erster Knopf gemäß beispielsweise einer der obigen Ausführungsformen das Sperren und Freigeben der Bewegung auf geeignete Art steuern kann, kann dieser Knopf als zusätzliche Sicherheitsmaßnahme genutzt werden, um die Inbetriebnahme der Maschine erst nach einer Prüfung, ob sich Personen im Bereich des Schutzelements aufhalten, zu ermöglichen.

Der Taster ist so ausgebildet, dass der zweite Knopf nur bei geschlossenem Schutzelement zum Freigeben des Betriebs der Etikettiermaschine betätigt werden kann. So kann verhindert werden, dass der Betrieb versehentlich bei noch geöffnetem Schutzelement freigegeben wird, womit die Sicherheit weiterer Personen und des Bedieners erhöht werden kann.

### Kurze Beschreibung der Figuren

- Fig. 1: zeigt schematisch eine Etikettiermaschine mit einem Schutzelement gemäß einer Ausführungsform
- Fig. 2a-c: zeigen Ausführungsformen verschiedener Griffe mit Tastern

### Ausführliche Beschreibung

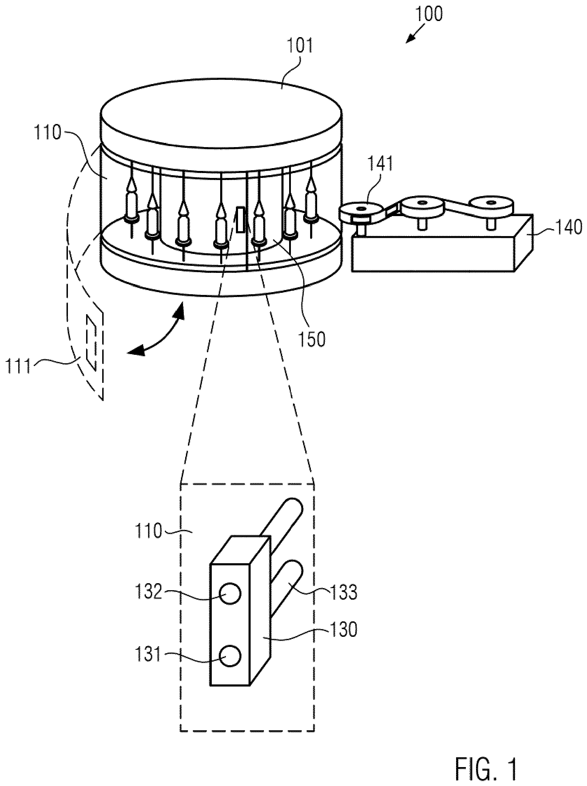

In Fig. 1 ist eine Etikettiermaschine 100 gemäß einer Ausführungsform der Erfindung dargestellt. In der hier dargestellten Ausführungsform umfasst die Etikettiermaschine ein Karussell 101 an dessen Peripherie mehrere Behälteraufnahmen 150 vorgesehen sind, in denen Behälter eingespannt werden können. Bei Drehung des Karussells 101 gelangen die Behälter so nach und nach zu dem Etikettieraggregat 140, an dem sie zumindest mit Hilfe des Zylinders 141 mit einem Etikett beaufschlagt werden. Solche Ausführungsformen von Etikettiermaschinen sind dem Fachmann hinlänglich bekannt.

Dem Fachmann ist auch bekannt, dass das Aufbringen der Etiketten beispielsweise mit Hilfe von selbstklebenden Etiketten (von Endlosrollen oder bereits gestückelt in Magazinen vorliegend) erfolgen kann oder hierfür auch Kaltleim- oder Heißleimetiketten zum Einsatz kommen, die zunächst gegebenenfalls zurecht geschnitten und anschließend mit Leim beaufschlagt werden, bevor sie auf den Behälter appliziert werden.

Die Ausführungsform der Etikettiermaschine als ein Karussell umfassend ist nicht zwingend. So kann auch eine Ausführungsform vorgesehen sein, in der die Etikettiermaschine als linear arbeitende Maschine ausgebildet ist. Ferner muss nicht nur ein Etikettieraggregat 140 an der Peripherie bzw. entlang der Etikettiermaschine vorgesehen sein, sondern es können auch mehrere Etikettieraggregate, die gegebenenfalls auch unterschiedliche Etiketten auf die Behälter applizieren können, vorgesehen sein.

Ferner umfasst die Etikettiermaschine, in der hier dargestellten Ausführungsform insbesondere das Karussell, ein Schutzelement 110. Dieses Schutzelement 110 ist in der hier dargestellten Ausführungsform als Tür ausgebildet, wobei die Tür insbesondere als Türflügel ausgebildet sein kann, der in die Position 111 verschwenkbar ist.

Dieser Türflügel umfasst einen Griff 130, der zum Bewegen des Türflügels bzw. allgemeiner des Schutzelements vorgesehen ist. Dazu kann der Griff 130 über Verbindungselemente 133 (auch nur ein Verbindungselement oder mehr als zwei Verbindungselemente sind hier denkbar) mit dem Schutzelement verbunden sein, sodass ein Bediener, der in geeigneter Weise den Griff betätigt bzw. an ihm zieht oder ihn drückt, das Schutzelement bewegen kann. In der hier dargestellten Ausführungsform kann ein Ziehen an dem Griff 130 also zum Öffnen der Tür führen, wohingegen ein Drücken des Griffs bei geöffneter Tür zum Schließen derselben führt.

Der Griff 130 umfasst erfindungsgemäß wenigstens einen Taster (auch Schalter genannt) 131 bzw. 132, mit dem bei Betätigung die Bewegung des Schutzelements freigegeben und/oder gesperrt werden kann. In der hier dargestellten Ausführungsform sind dabei zwei Knöpfe 131 und 132 vorgesehen, die zusammen den erfindungsgemäßen Taster bilden. Einer dieser Knöpfe kann bei Betätigung das Öffnen des Schutzelements derart ermöglichen, dass eine Bewegung aus dem geschlossenen Zustand heraus freigegeben wird. Der andere Knopf kann in dieser Ausführungsform das Schließen der geöffneten Tür ermöglichen oder bei Betätigung die Bewegung des Schutzelements sperren.

Alternativ oder zusätzlich kann auch vorgesehen sein, dass einer der Knöpfe, beispielsweise der Knopf 131, das Sperren und Freigeben der Bewegung des Schutzelements ermöglicht und der zweite Knopf (z.B. 132) zum Quittieren vorgesehen ist. In einer solchen Ausführungsform kann der Bediener das Schutzelement durch Betätigen des Knopfes 131 öffnen und schließen. Während das Schutzelement geöffnet ist, ist bevorzugt überhaupt kein Betrieb der Maschine möglich. Nachdem der Bediener das Schutzelement (beispielsweise unter Betätigung des Knopfes 131) geschlossen hat, kann vorgesehen sein, dass der Betrieb der Maschine dennoch nicht unmittelbar freigegeben wird. Vielmehr kann ein Quittieren, bzw. Bestätigen des Bedieners durch Drücken des zweiten Knopfes 132 als notwendiges Signal für das Wiederanfahren der Maschine vorgesehen sein, sodass der Bediener sich bevorzugt vor dem Quittieren über den Knopf 132 vergewissert, ob sich keine weiteren Personen im Bereich der Etikettiermaschine oder gar innerhalb des Schutzelements aufhalten und erst anschließend durch Betätigen des Knopfes 132 den Betrieb der Etikettiermaschine freigibt.

Ein solcher Knopf zum Quittieren oder Bestätigen, dass die Etikettiermaschine wieder in Betrieb genommen werden kann, kann auch zusätzlich zu den hier beschriebenen Ausführungsformen als "dritter" Knopf oder Schalter vorgesehen sein, wobei ein erster (und zweiter) Knopf für das Freigeben und Sperren der Bewegung des Schutzelements genutzt werden können.

Während das Schutzelement in der in Fig. 1 dargestellten Ausführungsform als Türflügel oder allgemeine Tür ausgebildet ist, kann auch vorgesehen sein, dass das Schutzelement im Sinne einer Haube ausgebildet ist und seine Bewegung zumindest zum Teil in einer vertikalen Richtung erfolgt. So sind auch Ausführungsformen denkbar, bei denen an der Peripherie des Karussells 101 ein Schutzelement 110 angeordnet ist, das nach oben oder nach unten, im Wesentlichen parallel zur Rotationsachse des Karussells, verschiebbar ist. Solche Ausführungsformen können genutzt werden, wenn der in der Ebene zur Verfügung stehende Platz zu gering ist, um das Öffnen von Türen zu ermöglichen.

In einem solchen Fall ist die in Fig. 1 dargestellte Anordnung des Griffs daher gegebenenfalls nicht vorteilhaft, da sie vom Bediener nicht in ergonomischer Weise derart genutzt werden kann, dass das vorgesehene Hebeschutzsegment angehoben werden kann. Im Falle des Vorsehens des Schutzelements 110 als Hebeschutzsegment kann der Griff bevorzugt quer, also bezüglich der in Fig. 1 dargestellten Ausführungsform um 90° gekippt angeordnet sein.

Auch die Ausbildung des Griffs 130 als Quader, wie schematisch in Fig. 1 dargestellt, ist nicht zwingend und auch nicht beschränkend zu verstehen. Hier können sämtliche Ausführungsformen, auch ergonomisch besser geeignete zum Einsatz kommen.

Um allgemein ein Abrutschen vom Griff bei der Bewegung des Schutzelements zu verhindern und damit das Verletzungsrisiko eines Bedieners zu reduzieren, kann der Griff mit einer Antirutschbeschichtung ausgebildet sein. Besonders vorteilhaft ist es, wenn auch der Taster mit einer solchen Beschichtung versehen ist.

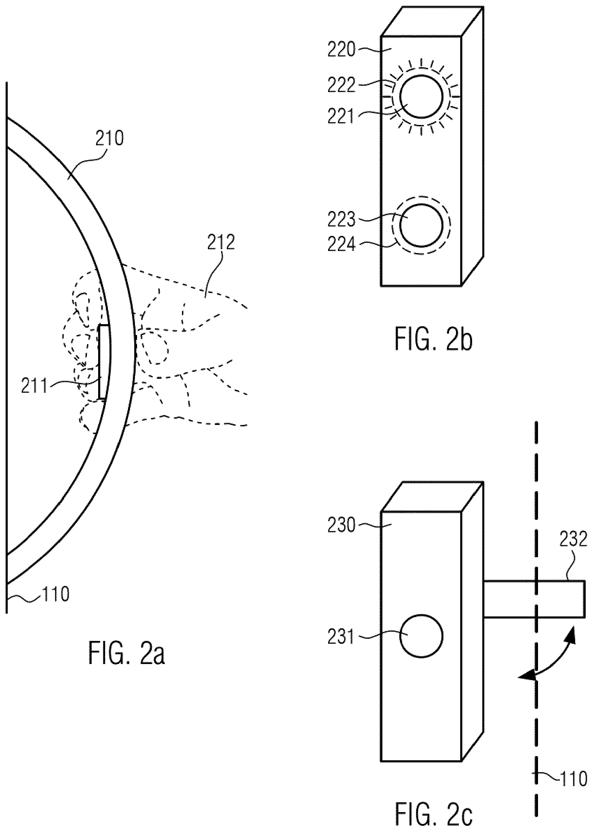

In Fig. 2a bis 2c sind verschiedene Ausführungsformen des Griffs und des Tasters dargestellt.

In Fig. 2a ist ein Griff 210 an einem Schutzelement 110 dargestellt. Der Griff 210 weist auf einer dem Schutzelement 110 zugewandten Seite (im Gegensatz zur in Fig. 1 dargestellten Ausführungsform) einen einzigen Knopf als Taster 211 auf. Dieser Taster kann als Totmanneinrichtung ausgebildet sein, sodass die Bewegung des Schutzelements 110, an dem der Taster befestigt ist, nur dann möglich ist, wenn der Taster 211 auch betätigt wird. Wird der Taster losgelassen, kann die Bewegung des Schutzelements vollständig gesperrt sein. Die Anordnung des Tasters auf der Rückseite bzw. der dem Schutzelement 110 zugewandten Seite des Griffs kann den Taster vor unerwünschten Umwelteinflüssen schützen. Ferner kann ein unerwünschtes Betätigen durch einen gegen den Griff stoßenden Bediener vermieden werden, wohingegen gleichzeitig eine gute Erreichbarkeit des Tasters beim Umgreifen des Griffs in üblicher Manier (hier dargestellt durch die Hand 212) erreicht wird.

In der Ausführungsform in Fig. 2b umfasst der Griff 220 als Taster wie in Fig. 1 zwei Knöpfe 221 und 223. Einer dieser Knöpfe kann zum Freigeben der Bewegung des hier nicht dargestellten Schutzelements vorgesehen sein, wohingegen der andere zum Sperren der Bewegung des Schutzelements ausgebildet ist. Alternativ kann auch vorgesehen sein, dass einer der Knöpfe (beispielsweise 221) bei dessen Betätigung das Öffnen des Schutzelements erlaubt, wohingegen die Betätigung des weiteren Knopfes (223 in diesem Fall) das erneute Schließen und anschließende wieder Inbetriebnehmen der Etikettiermaschine ermöglicht.

Um dem Bediener die Auswahl der richtigen Knöpfe zu erleichtern, kann jedem Knopf ein Lichtelement, beispielsweise eine LED zugeordnet sein. In der in Fig. 2b dargestellten Ausführungsform wird dies durch den Kranz 222 bzw. 224 rund um den Knopf 221 bzw. 223 bewirkt. Dieser Lichtkranz oder allgemeiner das Lichtelement kann aufleuchten, wenn für die anschließende Bewegung eines Schutzelements dessen Betätigung erforderlich ist. Befindet sich das Schutzelement beispielsweise im geschlossenen Zustand, so ist das Öffnen die einzig mögliche Bewegung für das Schutzelement. Ist der Knopf 221 für das Öffnen des Schutzelements bzw. zum Freigeben der dafür notwendigen Bewegung vorgesehen, kann im geschlossenen Zustand des Schutzelements das Lichtelement 222 (permanent) aufleuchten. Ferner oder alternativ kann vorgesehen sein, dass das jeweilige Lichtelement nur dann aktiviert wird und beispielsweise aufblinkt, wenn eine Bewegung ohne Betätigung irgendeines Knopfes 221 und 223 versucht wird oder der falsche Knopf betätigt wird. Ferner sind unterschiedliche Farben bzw. Kennzeichnungen möglich. Wird beispielsweise der falsche Knopf betätigt, kann das zugehörige Lichtelement rot aufblinken, wohingegen das Lichtelement für den jeweils korrekten Knopf grün leuchtet.

Auch andere Farbgebungen oder Signalmuster sind hier denkbar.

Die in Fig. 2a und 2b dargestellten Ausführungsformen von Tastern können sowohl analog als auch elektronisch vorgesehen sein. Die elektronischen Taster können zum Zwecke der Steuerung des Freigebens oder des Sperrens der Bewegung des Schutzelements 110 mit einer Steuereinheit, beispielsweise der zentralen Steuereinheit der Etikettiermaschine, also insbesondere einem Computer verbunden sein, der wiederum bestimmte elektrisch steuerbare Schließmechanismen kontrolliert und abhängig von der Betätigung des Tasters steuert.

Fig. 2c zeigt eine Ausführungsform des Griffs 230 mit einem analogen Taster 231, der hier als einzelner Knopf dargestellt ist. Dieser kann beispielsweise entsprechend der Fig. 2a als Totmanneinrichtung ausgebildet sein und eine Bewegung des Schutzelements 110 lediglich während seiner Betätigung ermöglichen.

Dieser analoge Taster 231 ist mit einem Verschließelement 232 mechanisch derart verbunden, dass eine Betätigung des Tasters 231 in eine Bewegung des Verschließelements 232 übersetzt wird, das zumindest bei der Betätigung des Tasters 231 die Bewegung des Schutzelements freigibt. Eine solche analoge Ausführung des Tasters kann vorteilhaft sein, da so selbst bei abgeschalteter zentraler Stromversorgung der Etikettiermaschine ein Öffnen und Schließen bzw. allgemein Bewegen des Schutzelements sicher gewährleistet werden kann.

## Patentansprüche

1. Behälterbehandlungsmaschine zum Behandeln von Behältern, insbesondere Etikettiermaschine (100) zum Etikettieren von Behältern, wie Flaschen in der getränkeverarbeitenden Industrie, mit wenigstens einer Maschineneinheit, die im Betrieb Behälter behandeln, insbesondere etikettieren, kann, und einem beweglichen Schutzelement (110) das zumindest einen Teil der Maschineneinheit von der Umgebung trennt, wobei das Schutzelement einen Griff (130/210) zum Bewegen des Schutzelements umfasst, **dadurch gekennzeichnet, dass** der Griff einen Taster (131/211) zum Ver- und/oder Entriegeln umfasst, bei dessen Betätigung die Bewegung des Schutzelements freigegeben und/oder gesperrt werden kann, wobei der Taster einen zweiten Knopf (132/221) umfasst, bei dessen Betätigung der Betrieb der Behälterbehandlungsmaschine freigegeben werden kann **dadurch gekennzeichnet, dass** der Taster so ausgebildet ist, dass der zweite Knopf nur bei geschlossenem Schutzelement zum Freigeben des Betriebs der Behälterbehandlungsmaschine betätigt werden kann.

2. Behälterbehandlungsmaschine nach Anspruch 1, wobei der Taster auf einer vom Schutzelement wegweisenden Seite des Griffs angeordnet ist.

3. Behälterbehandlungsmaschine nach Anspruch 1 oder 2, wobei der Taster so angeordnet ist, dass er beim Bedienen des Griffs zum Bewegen des Schutzelements gedrückt werden kann.

4. Behälterbehandlungsmaschine nach einem der Ansprüche 1 bis 3, wobei der Taster einen Knopf umfasst, bei dessen einmaliger Betätigung die Bewegung des Schutzelements freigegeben werden kann und bei dessen zweiter Betätigung die Bewegung des Schutzelements gesperrt werden kann.

5. Behälterbehandlungsmaschine nach einem der Ansprüche 1 bis 3, wobei der Taster als Totmanneinrichtung ausgebildet ist, die die Bewegung des Schutzelements nur während ihrer Betätigung freigibt und die Bewegung des Schutzelements sperrt, wenn sie nicht betätigt wird.

6. Behälterbehandlungsmaschine nach einem der Ansprüche 1 bis 5, wobei der Taster als analoger Taster oder als elektronischer Taster ausgebildet ist.

7. Behälterbehandlungsmaschine nach einem der Ansprüche 1 bis 6, wobei dem Taster ein Lichtelement, beispielsweise eine oder mehrere LEDs zugeordnet ist, das ein optisches Signal ausgeben kann, wenn eine Bewegung des Schutzelements ohne Betätigung des Tasters versucht wird.

8. Behälterbehandlungsmaschine nach einem der Ansprüche 1 bis 7, wobei das Schutzelement als Schutztür mit einem oder mehreren Türflügen oder als Hebeschutzsegment ausgebildet ist.

## Claims

1. Container treatment machine for treating containers, particularly a labeling machine for labeling containers, such as bottles in the beverage-processing industry, having at least one machine unit which in operation can treat containers, in particular label them, and a movable protective element (110) which separates at least part of the machine unit from the environment, the protective element comprising a handle (130/210) for moving the protective element, **characterized in that** the handle comprises a pushbutton (131, 211) for locking and/or unlocking, which when actuated can release and/or block the movement of the protective element, wherein the pushbutton comprises a second button (132, 221) which when actuated can release the operation of the labeling machine, **characterized in that** the pushbutton is designed such that the second button can only be actuated when the protective element is closed to release the operation of the labeling machine.

2. Container treatment machine according to claim 1, wherein the pushbutton is arranged on a side of the handle facing away from the protective element.

3. Container treatment machine according to claim 1 or 2, wherein the pushbutton is arranged such that it can be pressed when the handle is operated to move the protective element.

4. Container treatment machine according to any of claims 1 to 3, wherein the pushbutton comprises a button which when actuated once can release the movement of the protective element and which when actuated a second time can block the movement of the protective element.

5. Container treatment machine according to any of claims 1 to 3, wherein the pushbutton is designed as a dead man's device which releases the movement of the protective element only during its actuation and blocks the movement of the protective element if it is not actuated.

6. Container treatment machine according to any of claims 1 to 5, wherein the pushbutton is designed as an analog pushbutton or as an electronic pushbutton.

7. Container treatment machine according to any of claims 1 to 6, wherein the pushbutton has assigned thereto a light element, for example one or more LEDs, which can output an optical signal when an attempt is made to move the protective element without actuation of the pushbutton.

8. Container treatment machine according to any of claims 1 to 7, wherein the protective element is designed as a protective door with one or more door leaves or as a lift protection segment.

## Revendications

1. Machine de traitement de récipients permettant de traiter des récipients, en particulier machine d'étiquetage (100) permettant d'étiqueter des récipients tels que des bouteilles pour l'industrie des boissons, avec au moins un bloc machine capable, en fonctionnement, de traiter des récipients, en particulier de les étiqueter, et un élément de protection (110) mobile séparant au moins une partie du bloc machine par rapport à l'environnement, dans laquelle l'élément de protection comprend une poignée (130/210) permettant de déplacer l'élément de protection, **caractérisée en ce que** la poignée comprend une touche (131/211) de verrouillage et/ou déverrouillage dont l'actionnement peut libérer ou bloquer le déplacement de l'élément de protection, dans laquelle la touche comprend un second bouton (132/221) dont l'actionnement autorise le fonctionnement de la machine de traitement de récipients, **caractérisée en ce que** la touche est réalisée de sorte que le second bouton ne peut être actionné pour autoriser le fonctionnement de la machine de traitement de récipients que lorsque l'élément de protection est fermé.

2. Machine de traitement de récipients selon la revendication 1, dans laquelle le bouton est agencé sur un côté de la poignée se détournant de l'élément de protection.

3. Machine de traitement de récipients selon la revendication 1 ou 2, dans laquelle la touche est agencée de sorte qu'elle peut être pressée lors de l'utilisation de la poignée pour déplacer l'élément de protection.

4. Machine de traitement de récipients selon l'une quelconque des revendications 1 à 3, dans laquelle la touche comprend un bouton dont l'activation à une reprise peut autoriser le déplacement de l'élément de protection et dont une seconde activation peut bloquer le déplacement de l'élément de protection.

5. Machine de traitement de récipients selon l'une quelconque des revendications 1 à 3, dans laquelle la touche est réalisée sous forme de dispositif d'homme mort qui n'autorise le déplacement de l'élément de protection que pendant son actionnement et bloque le déplacement de l'élément de protection lorsqu'il n'est pas actionné.

6. Machine de traitement de récipients selon l'une quelconque des revendications 1 à 5, dans laquelle la touche est réalisée sous forme de touche analogique ou de touche électronique.

7. Machine de traitement de récipients selon l'une quelconque des revendications 1 à 6, dans laquelle un élément lumineux, par exemple une ou plusieurs DEL, capable d'émettre un signal optique lorsqu'un déplacement de l'élément de protection est tenté sans actionnement de la touche, est associé à la touche.

8. Machine de traitement de récipients selon l'une quelconque des revendications 1 à 7, dans laquelle l'élément de protection est réalisé sous forme de porte de sécurité avec un ou plusieurs battant(s) de porte ou sous forme de segment de protection à lever.
